# EUROPEAN PATENT SPECIFICATION

(11) **EP 4 542 702 B1**
(45) Date of publication and mention of the grant of the patent: **25.03.2026**
(21) Application number: 24198601.7
(22) Date of filing: 05.09.2024
(51) Int. Cl.: H01M 10/04, H01M 50/609, H01M 50/30, H01M 4/04, H01M 50/627

(54) **DEVICE FOR HOLDING AND MOVING LITHIUM BATTERY CELLS DURING PRODUCTION AND METHOD FOR PRODUCING A PLURALITY OF LITHIUM BATTERY CELLS WHICH USES THE DEVICE**
VORRICHTUNG ZUM HALTEN UND BEWEGEN VON LITHIUMBATTERIEZELLEN WÄHREND DER HERSTELLUNG UND VERFAHREN ZUR HERSTELLUNG EINER VIELZAHL VON LITHIUMBATTERIEZELLEN MIT DER VORRICHTUNG
DISPOSITIF DE MAINTIEN ET DE DÉPLACEMENT D'ÉLÉMENTS DE BATTERIE AU LITHIUM PENDANT LA PRODUCTION ET PROCÉDÉ DE FABRICATION D'UNE PLURALITÉ D'ÉLÉMENTS DE BATTERIE AU LITHIUM UTILISANT LE DISPOSITIF

(30) Priority: 19.10.2023 IT 202300021828
(43) Date of publication of application: 23.04.2025
(73) Proprietor: Digatron Systems S.r.l., 20123 Milano (IT)
(72) Inventor: POL, Stefano, 37138 Verona (IT)
(74) Representative: Ponchiroli, Simone

(56) References cited:
- EP-A1- 3 734 693
- CN-U- 219 393 656
- US-B2- 10 811 720

## Description

### Technical field

This invention relates, firstly, to a device for holding and moving lithium battery cells during production, in particular for holding and moving cells with a rigid outer case which are not yet sealed, which must be subjected to a forming (first charging) process outside of the controlled-atmosphere environments in which they are assembled (in the sector known as dry rooms, that is to say, clean rooms with extremely low humidity levels in the air).

**In** fact, this invention allows the safe movement of cells which are not yet sealed even outside of the dry rooms and has the great advantage of notably simplifying the degassing operations which must be carried out at the end of the forming process.

In particular, this invention is intended for the production of prismatic lithium cells but can similarly be advantageously applied even for cylindrical lithium cells.

Secondly, this invention also relates to a method for producing a plurality of lithium battery cells which uses the above-mentioned device to safely carry out the forming process for cells which are not yet sealed outside the dry rooms.

### Background art

As is known, the heart of a lithium-ion battery (widely known simply as a lithium battery) is the individual cells of which it is made up, which are the elements that allow the battery to store and to supply electric energy.

There are three most common types of lithium-ion cells on the market, cylindrical cells, prismatic cells and pouch cells.

This invention can be applied only for the first two types, in which each cell has a substantially rigid outer case.

Cylindrical cells are usually used in medium-small battery packs, whilst prismatic cells are usually used to create the lithium batteries dedicated to sectors which require medium-high storage capacity, such as the sector of machines and industrial vehicles, or that of energy storage.

Both types of cells generally have an aluminium or plastic material case which is very strong and they may come in various sizes and shapes depending on the field of application.

As is known, lithium-ion cells contain two electrodes, that is to say, a cathode (positive pole) and an anode (negative pole). Interposed between the two electrodes there is a separator, that is to say, a layer of thin material, usually made of a plastic polymer or ceramic whose function is to act as insulation between the two electrodes. Finally, the electrodes and the separator are completely submerged in an electrolyte, a liquid containing lithium salts, which fills the inner volume of the cell and which during use allows electric energy to circulate between the two electrodes.

Whilst in the cylindrical cells the two electrodes are each constituted of a single thin sheet of conductive material, and the two sheets are wound in a single roll interposing between them two continuous sheets of separator, in the prismatic cells each electrode comprises a plurality of distinct sheets superposed on each other which are electrically connected to each other by suitable protruding tabs. The individual sheets of each electrode alternate with those of the other electrode, with the separator interposed between them (the latter may also be in the form of individual sheets or be a continuous sheet folded on itself in a Z shape). The end result in prismatic cells is that the two electrodes and the separator constitute what is defined as a pack which substantially has the shape of a parallelepiped. The tabs of the sheets which constitute the electrodes protrude from the pack in two distinct positions, those of the sheets of the cathode which are aligned and superposed on each other and those of the sheets of the anode which are aligned and superposed on each other.

The tabs of the two inner electrodes are also connected to respective terminals (positive and negative) fixed on a lid of the outer case.

During the cell production process, the first step is to make the pack comprising the electrodes and the separator (also meaning the roll in the case of cylindrical cells). Then, the pack is inserted into a main body of the outer case and the two electrodes are electrically connected to the respective terminals present on the lid.

Finally, the lid is fixed in a sealed fashion to the main body to close the inner volume. However, during this step, the lid has a through hole which connects the inner volume with the surrounding environment and which has the function of allowing the next step to be carried out in which the electrolyte is inserted into the inner volume.

The quantity of electrolyte inserted is usually predetermined and in excess in order to take into account the fact that a certain quantity of it will then evaporate in the subsequent working steps. The liquid electrolyte, fed through the through hole, is gradually absorbed by the pack due to capillarity (in fact, where it is essential to have the liquid is in the middle of the pack, between all of the sheets of the electrodes and of the separator). Filling is a slow process, since it is necessary to allow the liquid time to be absorbed without making it come out of the access port through which it is fed.

For all of the steps described so far to be successful, it is essential that all operations are carried out in extremely controlled environments in terms of the levels of both air contamination and humidity. Normally all of the operations are therefore carried out in environments called dry rooms, that is to say, clean rooms with extremely low levels of humidity. As is easy to infer, producing and managing dry rooms have high costs which rise more than in proportion with increases in the size of the dry rooms. Consequently, especially in the case of medium-small production plants (things may be different in so-called giga-factories), efforts are always made to keep the size of the dry rooms as small as possible.

However, once filling with electrolyte is complete, the cell production process is still far from over. In fact, at the end of this step it is necessary to subject the cell to the forming step during which a first electrical charging of the cell is carried out (according to a predetermined time pattern). In fact, only correct carrying out of the forming process causes electrical activation of the cell and renders it capable of subsequently being used to store and release electric energy. The forming process is a long process (it may even last 8h-10h) and has the disadvantage of causing gases to be created inside the cell mainly as a result of evaporation of part of the electrolyte.

Although in theory it is also possible to perform the forming inside the dry room, keeping the through hole used for filling open, so as to allow the gases created to freely come out, in order to do this it would be necessary to have extremely larger dry rooms than those necessary for assembly of the cell, and the relative production costs would become far too high.

In accordance with the widely used prior art, the only option is therefore to perform the forming process outside the dry room, taking care to seal the through hole at the end of assembly in order to be able to move the cells outside, without the risk of compromising the quality of the inner components. The disadvantage of that choice is that the gases which are created during forming of the cell cannot come out and they remain trapped inside the cell, in particular in a space deliberately left empty, which is located between the upper level of the electrolyte and the lid.

Consequently, in accordance with the prior art, after the forming step a cell degassing step is provided, during which the hole is re-opened and the excess gas is made to come out of the cell. This step must also be carried out inside the dry room in order to avoid the risk of deterioration of the inner components. Only at the end of the degassing step can the cell be finally sealed, after any electrolyte top-up if necessary, and be sent on for subsequent ageing and charging-discharging steps.

Therefore, the prior art has several important disadvantages.

Firstly, the need to perform the forming outside the dry room results in additional operating costs linked, first, to temporary sealing of the cell and, then, to the need to pierce it again in order to be able to proceed with degassing.

Secondly, to prevent the internal pressure from increasing too much due to the gases created during the forming step, it is necessary to size the outer case of the cell so that it is sufficiently larger than the space occupied by the pack and by the electrolyte, to guarantee the presence of an empty space above the electrolyte which can limit the increase in internal pressure. In fact, excessive internal pressures could lead to the risk of cell explosion during the forming step, as well as consequent fire risks.

This technical need inevitably clashes with market demands, especially in the sector of electric vehicles, for the most compact cells possible in order to maximise the power that can be stored, the space occupied by the batteries being equal.

### Disclosure of the invention

In this context the technical purpose which forms the basis of this invention is to at least partially overcome the above-mentioned disadvantages.

In particular, the technical purpose of this invention is to define a method for producing lithium battery cells which allows the cell forming process to be carried out safely without the need to temporarily seal and then re-pierce them, as well as to define a device usable in that context.

Furthermore, the technical purpose of this invention is to define a method for producing lithium battery cells which allows the cell forming process to be carried out safely even in the case in which they have a very small empty inner volume, as well as to define a device usable in that context.

The technical purpose and the aims indicated are substantially achieved by a device for holding and moving lithium battery cells during production and by a method for producing a plurality of lithium battery cells which uses the device, in accordance with what is defined, respectively, in claims 1 and 12. Particular embodiments of this invention are defined in the corresponding dependent claims.

### Brief description of drawings

Further features and the advantages of this invention will be more apparent from the detailed description of several preferred, non-limiting embodiments, of a device for holding and moving lithium battery cells during production and of a method for producing a plurality of lithium battery cells which uses the device, illustrated with reference to the accompanying drawings, wherein:
- Figure 1 is an axonometric top view of two devices according to this invention which each carry a plurality of lithium battery cells and which are positioned on a transport pallet;
- Figure 2 is an enlarged view of the detail II of Figure 1;
- Figure 3 is a side view of what is visible in Figure 1;
- Figure 4 is a cross-section of what is visible in Figure 3, according to the line IV-IV;
- Figure 5 is an axonometric view of one of the devices in accordance with this invention visible in Figure 1;
- Figure 6 shows the device of Figure 5 with some parts cut away to better illustrate others (in particular a holding member of the device and the plurality of cells have been removed);
- Figure 7 is a top view of the device of Figure 5;
- Figure 8 is a cross-section of the device of Figure 7, according to the line VIII-VIII;
- Figure 9 is a top view of only a holding member which is part of the device of Figure 7;
- Figure 10 is a cross-section of the holding member of Figure 9, according to the line X-X;
- Figure 11 is a cross-section of the holding member of Figure 9, according to the line XI-XI;
- Figure 12 is a cross-section of the holding member of Figure 9, according to the line XII-XII;
- Figure 13 is an enlarged view of the detail XIII-XIII of Figure 8;
- Figure 14 is an enlarged view of the detail XIV-XIV of Figure 11;
- Figure 15 is an enlarged view of some parts visible in Figure 14;
- Figure 16 is a top view not in cross-section of the same parts as in Figure 15;
- Figure 17 is an axonometric view of an apparatus for forming lithium battery cells configured to operate on the elements visible in Figure 1;
- Figure 18 is a front view of a part of the apparatus of Figure 17;
- Figure 19 is a cross-section of the part visible in Figure 18 according to the line XIX-XIX;
- Figure 20 is an enlarged view of the detail XX-XX of Figure 19;
- Figure 21 is a schematic side cross-section view of an insertion step which is part of the method according to this invention;
- Figure 22 is a schematic side cross-section view of an electrical connection step which is part of the method according to this invention;
- Figure 23 is a schematic side cross-section view of a closing step which is part of the method according to this invention;
- Figure 24 is a schematic side cross-section view of a filling step which is part of the method according to this invention;
- Figure 25 is a schematic plan view of the structure of a pack visible in Figures 21 to 24 and comprising one or more first electrodes which constitute a cathode of the cell, one or more second electrodes which constitute an anode of the cell and one or more separator materials interposed between the first electrodes and the second electrodes.

### Detailed description of a preferred embodiment of the invention

With reference to the above-mentioned figures, the reference number 1 indicates in its entirety a device for holding and moving lithium battery cells 2 during production, according to this invention (hereinafter simply indicated as device 1).

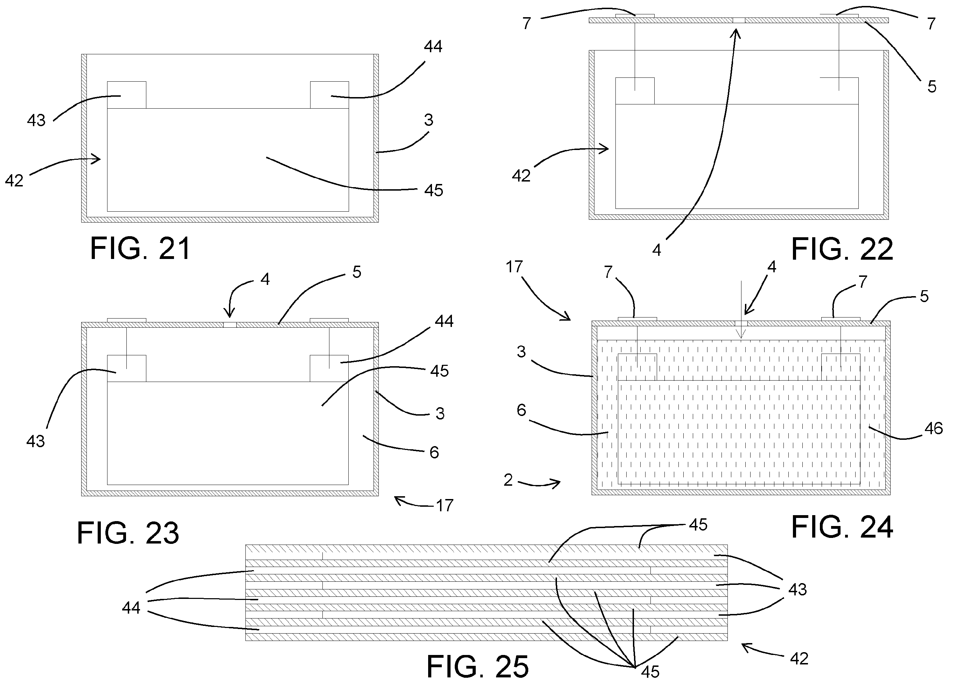

As already indicated, the cells 2 to which this invention relates are normal lithium battery cells 2, each of which comprises an outer case 3 that is substantially rigid and that has an access port 4 (made in a lid 5 of the outer case 3 - Figures 21-25). The access port 4 is open and connects the outside environment with the inner volume 6 of the cell 2. The electrodes 43, 44, the separator 45 and the liquid electrode 46 are present in the inner volume. The electrodes 43, 44 are electrically connected to corresponding terminals 7, positive and negative, fixed to the lid 5 of the case. A safety valve 8 may also be pre-installed in the lid 5.

When reference is made below to "gas-tight" or to "gas-tight" connections, this indicates that the seal must be guaranteed at the normal pressure differences which can be generated in the context of a lithium-ion cell 2 production process in which use is made of the device 1 disclosed.

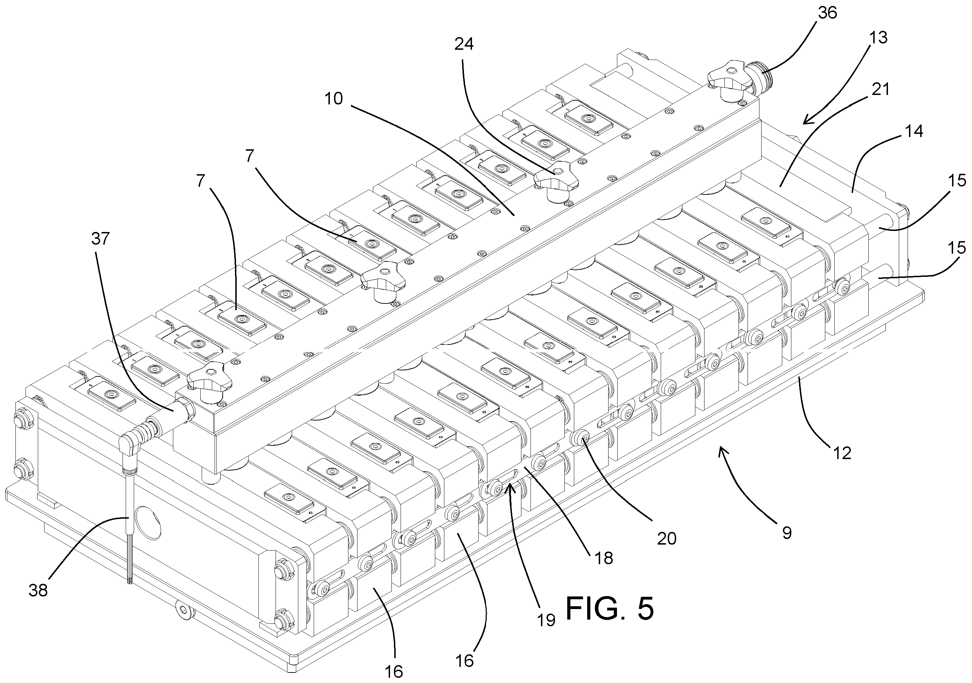

The device 1 comprises a supporting base 9 and a holding member 10 (Figure 5).

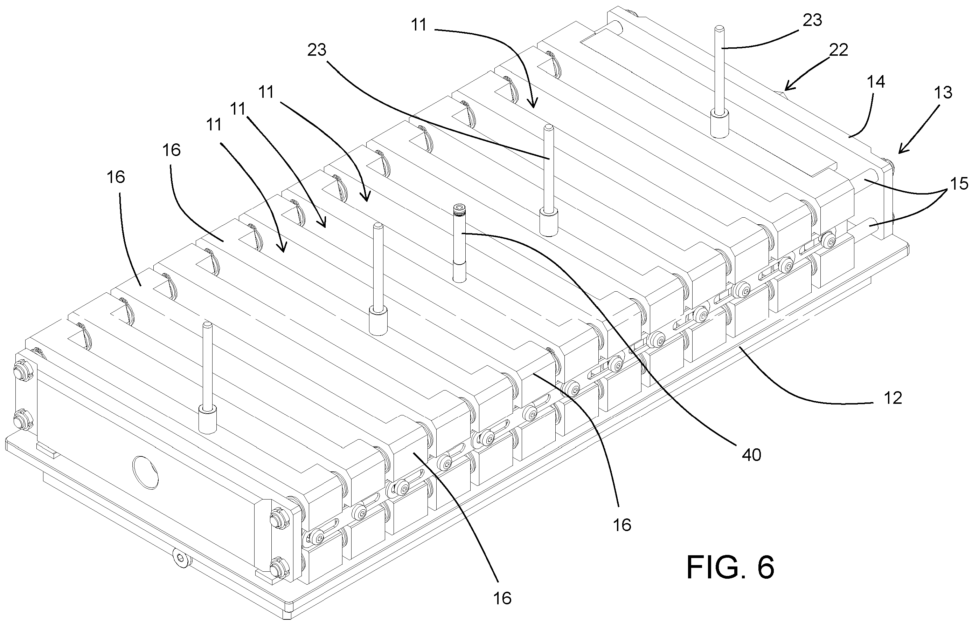

The supporting base 9 defines a plurality of bays 11 (Figure 6), each of which is configured to house a cell 2 in a respective first predetermined position (Figure 5). Moreover, the bays 11 are defined in such a way as to keep the access port 4 of each cell 2 in a respective second predetermined position. Even the electrical terminals 7 are in respective predetermined positions.

In the preferred embodiment the supporting base 9 comprises a lower body 12 and a unit 13 for compacting and positioning the cells 2, which is mounted on the lower body 12 (Figures 6-7).

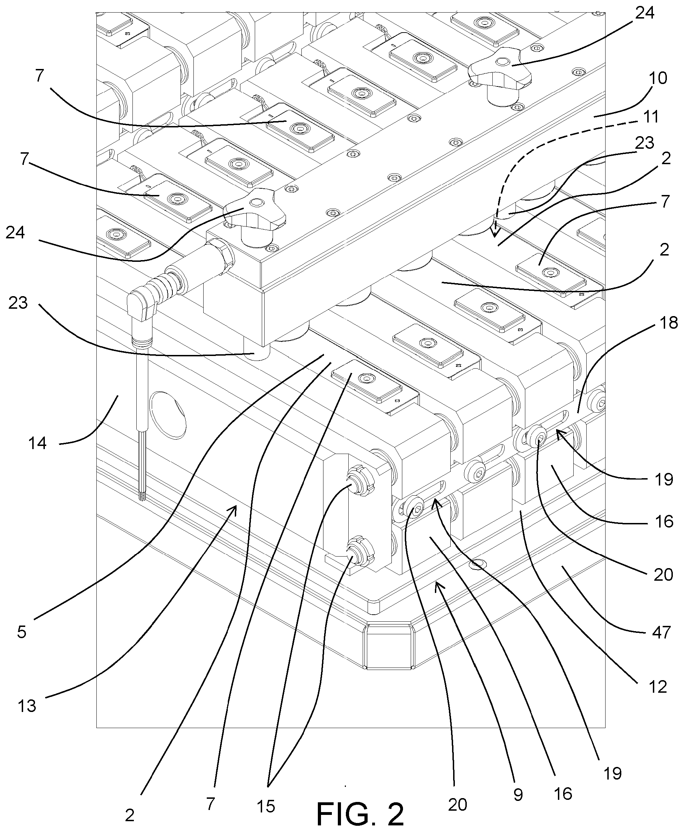

The compacting and positioning unit 13 comprises two fixed shoulders 14, positioned at the short sides of the lower body 12, between which a plurality of parallel bars 15 extends (four in the accompanying figures, two on each side - Figures 6-7). Slidingly mounted on the bars 15 is a plurality of spacers 16, each of which has a C shape if seen in plan view. The inner part of the C is shaped to match a part of the lateral surface of the main body 17 of the outer case 3 of the cell 2, in order to be able to stably house it. Each spacer 16 is also connected to the two spacers 16 which are adjacent to it in such a way that it can be displaced, relative to each of them, between a minimum distance position and a maximum distance position. In the embodiment illustrated (Figures 2-3), for each spacer 16 that is achieved by means of two plates 18, fixed one on each side of the spacer 16, which extend parallel to the bars 15 all in the same direction (all towards the left in the accompanying figures). Each plate 18 defines a straight slot 19 which is also parallel to the bars 15, through which there is inserted with play a screw 20 fixed to the adjacent spacer 16. The length of the slot 19 determines the maximum stroke of the relative displacement of the two spacers 16.

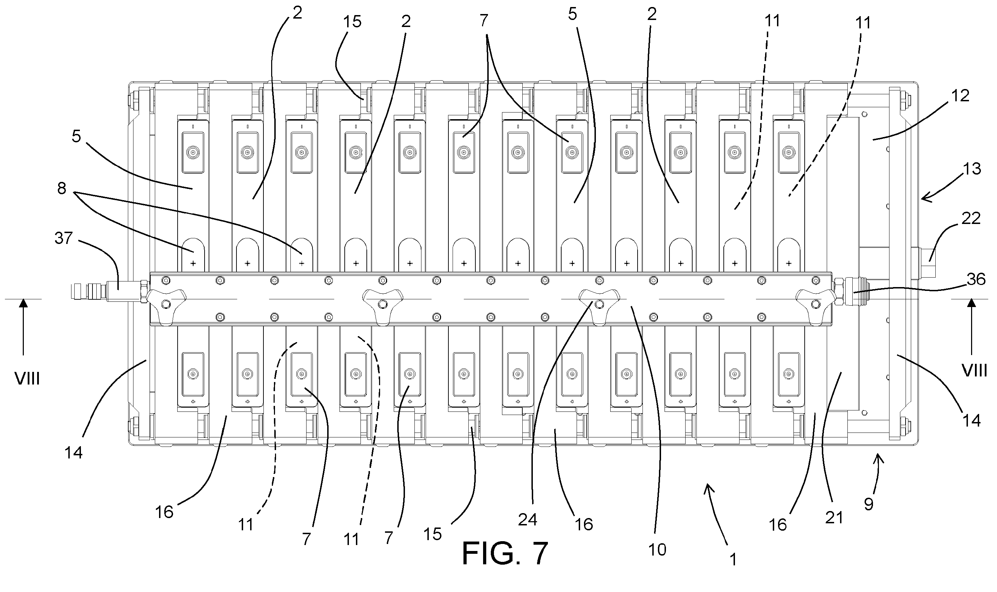

A pressing element 21 is interposed between one of the two shoulders 14 (the right-hand shoulder in Figure 6 and 7) and the spacer 16 closest to it. In some embodiments the pressing element 21 has a shape substantially similar to that of a main body 17 so that it can be inserted into the C defined by the spacer 16. A threaded pin 22 is screwed through the shoulder 14 and acts by pushing on the pressing element 21 to push it towards the other shoulder 14, that is to say, against the closest spacer 16.

In use, starting from a condition in which the pressing element 21 is close to the shoulder 14, and the spacers 16 may be freely displaced relative to each other along the bars 15, it is possible to insert a cell 2 between each pair of adjacent spacers 16. Once all of the cells 2 have been positioned, the threaded pin 22 is acted upon to push the pressing element 21 against the spacer 16, until all of the cells 2 and the spacers 16 are compacted "in a pack", thereby guaranteeing precise and stable positioning of the cells 2. In this embodiment, the bays 11 are therefore defined by the space located between two adjacent spacers 16 when the whole system is "in a pack".

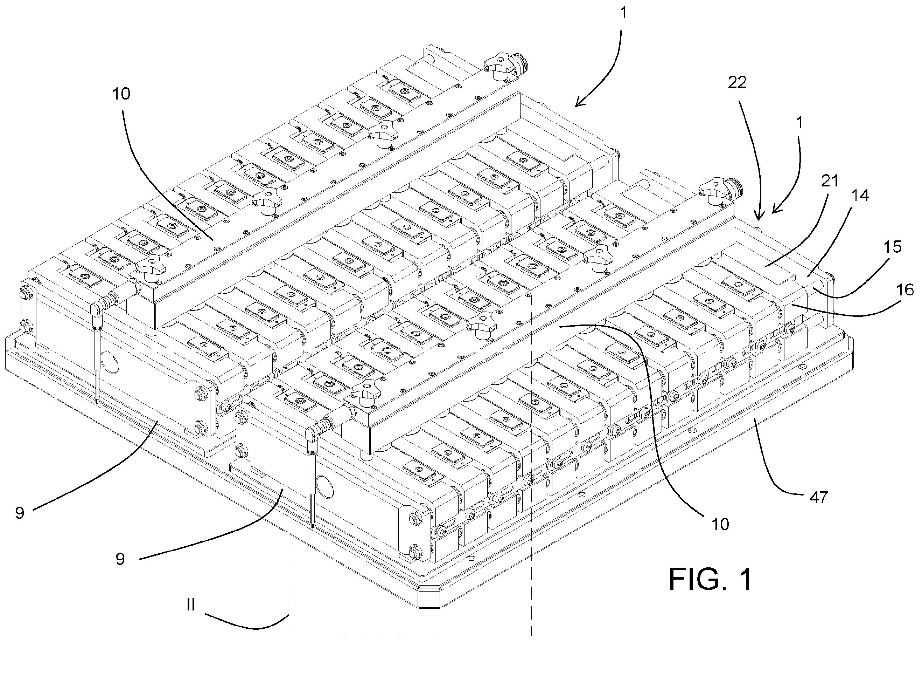

The holding member 10 is switchable, relative to the supporting base 9, between a working configuration (Figures 1-5, 7-8) and a rest configuration (not illustrated).

When it is in the working configuration, the holding member 10 is bound to the supporting base 9 above the bays 11 and, in use, prevents the removal of the cells 2 from the bays 11. However, at the same time, the holding member 10 is advantageously sized in such a way as to leave free access to the terminals 7 of each cell 2 (to allow the forming step to be performed). The latter are also advantageously positioned with all of the positive terminals 7 aligned with each other and all of the negative terminals 7 aligned with each other.

In contrast, when it is in the rest configuration, the holding member 10 allows, in use, insertion of the cells 2 into the bays 11 and removal of the cells 2 from the bays 11. In the embodiment illustrated, when it is in the rest configuration, the holding member 10 is disassociated from the supporting base 9.

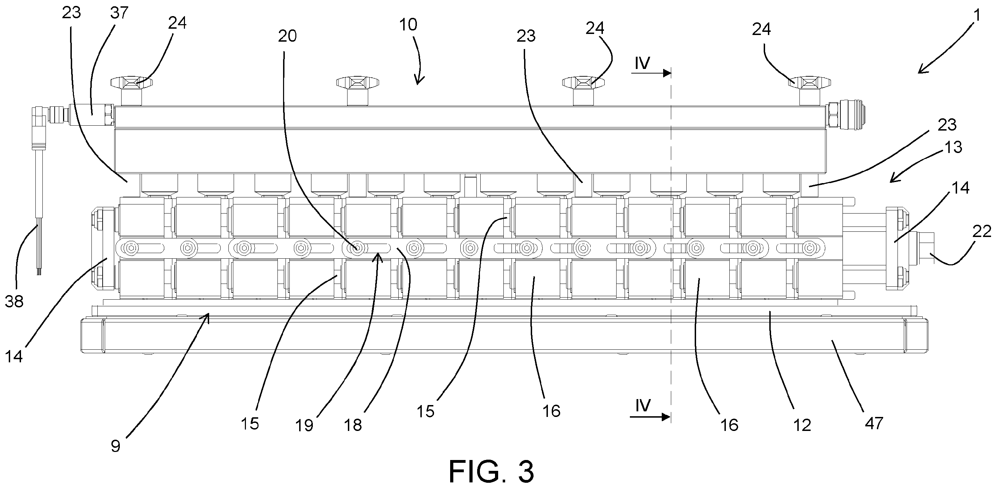

Advantageously, in the embodiment illustrated, the connection between the holding member 10 and the supporting base 9 is obtained by means of a plurality of screws 23 fixed to the supporting base 9 (in four distinct spacers 16 in the embodiment illustrated - Figure 6) which are inserted passing through the holding member 10. Screwed onto the screws 23 there is an enlarged head which is configured to press on the upper part of the holding member 10 (in the embodiment illustrated in the accompanying figures the enlarged head is constituted of a knob 24 - Figures 3-5).

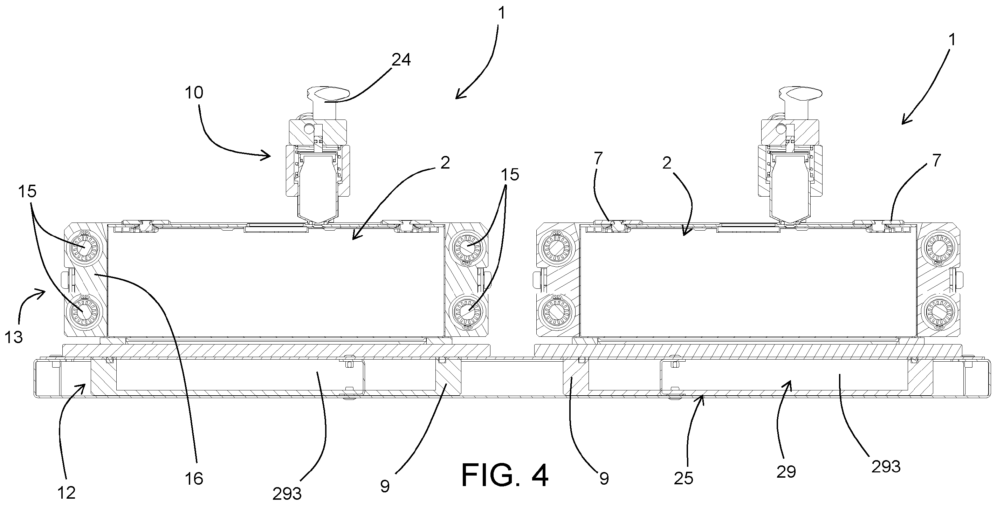

In accordance with a main innovative aspect of this invention, the device 1 comprises an expansion circuit 25 (Figures 4, 9, 11) configured to receive, in use, any gaseous substances emitted from the access ports 4 of the cells 2 when the holding member 10 is in the working configuration.

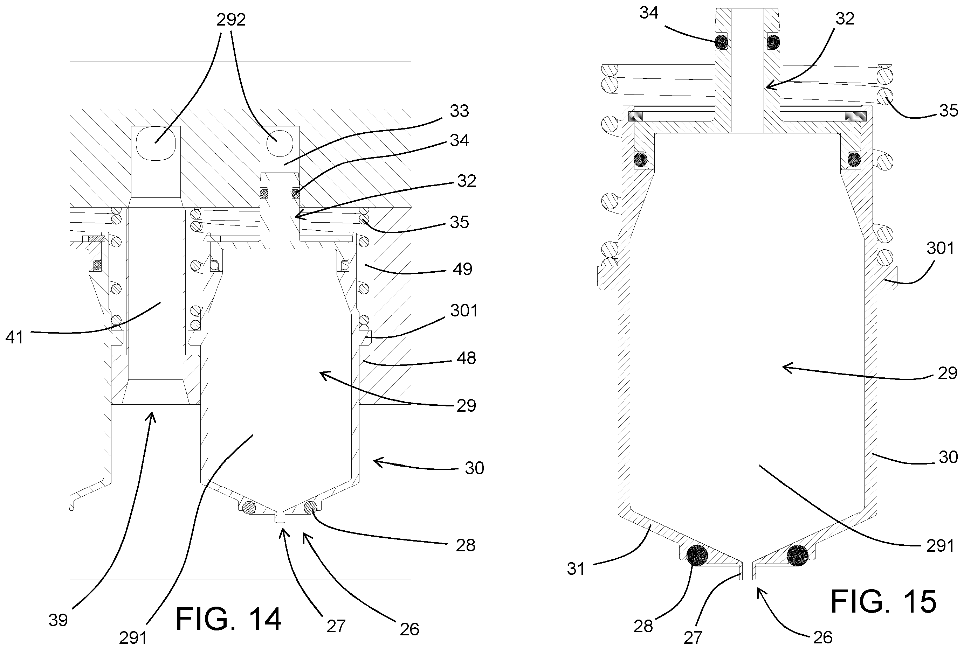

For that purpose, at each bay 11, the expansion circuit 25 comprises a connecting inlet 26 (Figures 14-15) mounted on the holding member 10 and configured to, in use, couple gas-tight to the access port 4 of the cell 2 located in the bay 11 at which the connecting inlet 26 is located, when the holding member 10 is in the working configuration.

In the preferred embodiment each connecting inlet 26 comprises a nozzle 27 and a sealing gasket 28 (Figure 14-15). The nozzle 27 is configured to be inserted in the access port 4, whilst the sealing gasket 28 is configured to be pressed against the outer case 3 of the cell 2, around the access port 4. The sealing gasket 28 therefore in use allows the connecting inlet 26 to be connected gas-tight to the access port 4.

The expansion circuit 25 also comprises one or more expansion chambers 29 and each connecting inlet 26 is fluidly connected with at least one of those expansion chambers 29 in such a way that, in use, any gases created in the inner volume 6 of the cell 2 can freely flow into the one or more expansion chambers 29 through the access ports 4 and the connecting inlets coupled to them.

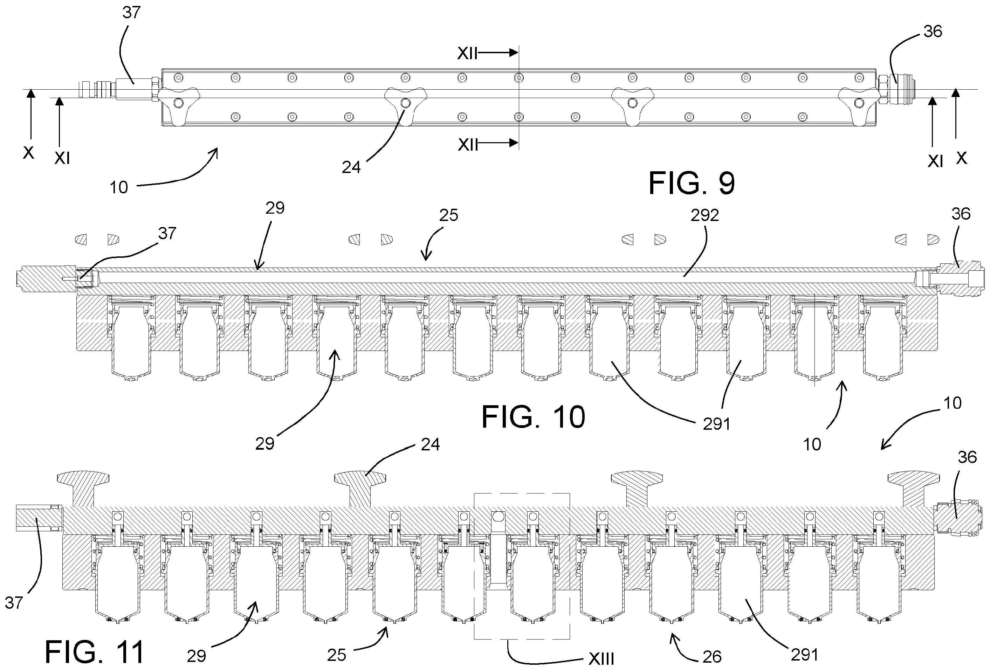

In some embodiments, for each connecting inlet 26, there is a first expansion chamber 291 present which is mounted on the holding member 10 and is fluidly connected with the connecting inlet 26, advantageously directly connected to it (Figures 10-11, 14-15). As can be seen in Figures 14 and 15, in the preferred embodiment, each first expansion chamber 291 is defined by a tumbler-shaped body 30 that is mounted on the holding member 10 and that has a bottom wall 31 with which the connecting inlet 26 is associated. Preferably, the bottom wall 31 has a funnel shape converging towards the connecting inlet 26, so as to facilitate the return into the cell 2 of any electrolyte liquid that, during the working operations, might come out of the cell 2 in liquid form, or condense in the first expansion chamber 291.

Although in some embodiments it is possible for each first expansion chamber 291 to be independent and for the tumbler-shaped body 30 to be closed at the top, in some preferred embodiments the tumbler-shaped body 30 has an upper wall in which a discharge conduit 32 is made.

Moreover, in some preferred embodiments, the tumbler-shaped body 30 is slidingly associated with the holding member 10 (Figure 14) and is movable relative to the holding member 10 between a protruding position and a retracted position. In the embodiment illustrated, it is the discharge conduit 32 which is slidingly inserted into a seat 33 made in the holding member 10. A sealing gasket 34 is preferably interposed between the tumbler-shaped body 30 and the holding member 10 to guarantee that the first expansion chamber 291 remains gas-tight relative to the outside environment. The device 1 also comprises elastic means 35 interposed between the holding member 10 and the tumbler-shaped body 30, which push the tumbler-shaped body 30 towards the protruding position in the absence of other stresses. The protruding position is caused by the interaction of a protruding annular shoulder 301 fixed to the tumbler-shaped body 30 with a closing shoulder 48 of the cavity 49 into which the protruding body 30 is inserted in the holding member 10.

When the holding member 10 is mounted on the supporting base 9 and is pushed towards the sealed configuration by screwing the knobs 24 on the screws 23, the interaction between the cells 2 and the bottom wall 31 of the tumbler-shaped bodies 30 causes compression of the elastic means 35. Moreover, when the holding member 10 reaches the working configuration, the elastic means 35 allow compensation for any coupling tolerances between each cell 2 and the device 1 in any case guaranteeing sealing.

In some preferred embodiments, amongst the expansion chambers 29 there is at least one collecting chamber 292 present (Figures 9, 12-14) which is advantageously made in the holding member 10 and which is fluidly connected either with all of the connecting inlets 26, or only with a plurality of connecting inlets 26 (if multiple independent collecting chambers are present, each can only be fluidly connected with one group of connecting inlets 26).

In some embodiments, the expansion circuit 25 further comprises a connecting valve 36 (Figures 7-11), advantageously fluidly connected with the collecting chamber 292, preferably a quick-connect valve. Depending on the use of the device 1, that connecting valve 36 may be used, in use, for different functions. In some embodiments the connecting valve 36 is connectable to an external suction circuit to allow, in use, an emptying of the one or more expansion chambers 29, by sucking out of the expansion circuit 25 the gases which built up in it as a result of the forming step for the cells 2. In contrast, in other preferred embodiments, the connecting valve 36 is connectable to an external pressurised gas supply (inert gas) to allow, in use, a pressurisation of the one or more expansion chambers 29 before proceeding with the forming step for the cells 2. In contrast, in other embodiments, it may be used for both functions. With regard to this it should also be noticed that proceeding with a pressurisation of the expansion chambers 29 before the forming step allows a dual advantage. Firstly, it allows precise monitoring of the gas-tightness by simply monitoring the pressure trend inside the expansion chambers 29; in fact, since the forming step may cause only a further increase in the internal pressure, any reduction in the pressure detected would indicate the presence of a loss of seal. Secondly, pressurisation of the expansion chambers 29 may allow contamination of the inner volume 6 of the cells 2 to be avoided even in the event of a loss of seal (provided that action is taken quickly enough); in fact, in the event of a loss of seal, the internal overpressure means that at least for a certain period there is a release of gas from the expansion chambers 29 towards the outside and no entry of outside air into the cells 2. In accordance with what was just described, in some embodiments, the device 1 further comprises at least one pressure transducer 37 mounted in fluid connection with the expansion circuit 25, for measuring the pressure inside the expansion circuit 25. In the accompanying figures, the pressure transducer 37 is mounted at one end of the collecting chamber 292, whilst the connecting valve 36 is mounted at the other end (Figures 5, 7, 11).

The pressure transducer 37 comprises an electrical connecting cable 38 which can be connected to an electronic control system for monitoring the pressure trend in the expansion circuit 25 while the forming step is being carried out (Figure 5).

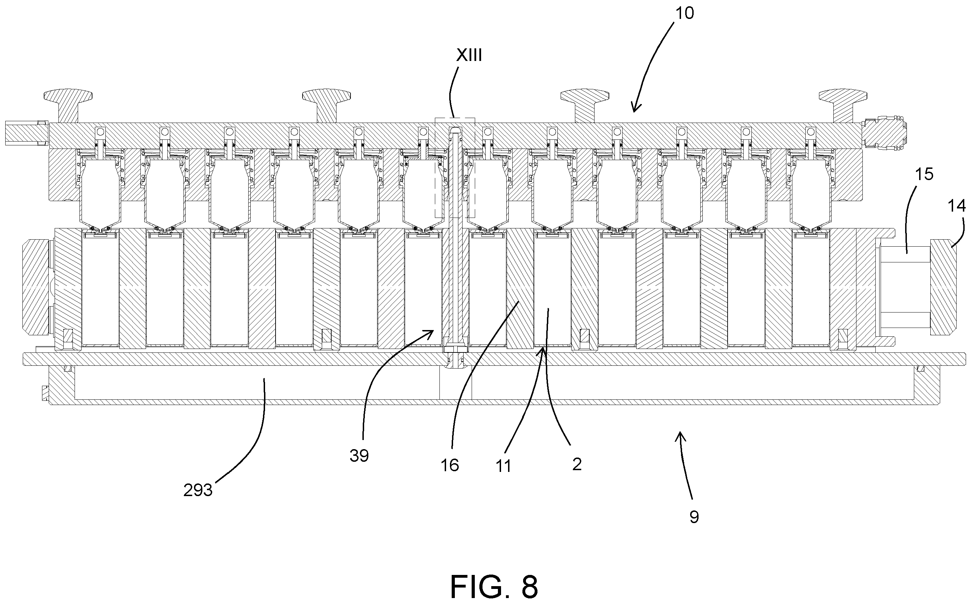

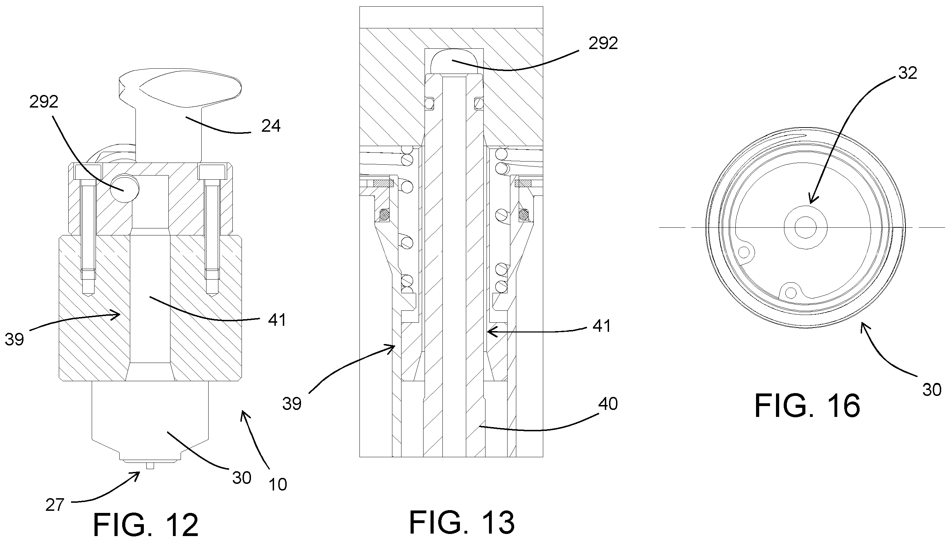

In some embodiments, such as that illustrated in the accompanying figures, amongst the expansion chambers 29 there is a second expansion chamber 293 present which is made in the supporting base 9, advantageously in the supporting body 12 (Figures 4 and 8). In that case, the expansion circuit 25 advantageously also comprises a connecting conduit 39, that fluidly connects the second expansion chamber 293 with one or more connecting inlets 26 (Figures 12-14). In the embodiment illustrated, the connecting conduit 39 fluidly connects the second expansion chamber 293 with the collecting chamber 292.

In some embodiments, such as that of the accompanying figures, the connecting conduit 39 comprises a first stretch 40 fixed to the supporting base 9, and a second stretch 41 fixed to the holding member 10, which have ends shaped to match each other so that they couple to each other with a male-female connection (Figure 13).

In the preferred embodiments, the device 1 comprises a plurality of expansion chambers 29 all fluidly connected with each other and with all of the connecting inlets 26.

The device 1 described above is advantageously applied in the context of the method for producing a plurality of lithium battery cells 2 which is the subject matter of this invention, and in particular to implementation of the forming and degassing steps for the cells 2.

Similarly to the corresponding prior art methods, the one disclosed according to this invention comprises firstly, for each cell 2, a sequence of steps performed inside a dry room.

It starts with an insertion step, during which a pack 42 (previously formed) comprising one or more first electrodes 43 which constitute a cathode of the cell 2, one or more second electrodes 44 which constitute an anode of the cell 2 and one or more separator materials 45 interposed between the first electrodes 43 and the second electrodes 44, is inserted into the main body 17 of the outer case 3 of the cell 2 (Figures 21 and 25).

During a subsequent electrical connection step (Figure 22), the cathode and the anode of the cell 2 are electrically connected to the corresponding electrical terminals 7 mounted on the lid 5 of the outer case 3, similarly to what was described above relative to the prior art. As already indicated, the lid 5 also has the access port 4 which passes through it and is open.

The method then continues with a closing step (Figure 23), during which the lid 5 is fixed fluid-tight to the main body 17 to enclose the pack 42 inside the outer case 3. The fluid-tight sealing relates to the connecting zone of the lid 5 to the main body 17 and is advantageously performed by welding. However, it should be noticed that the closing step does not affect the access port 4 which is kept open (therefore, the inner volume 6 is not isolated in a sealed fashion from the outside environment).

At this point a filling step takes place, during which the electrolyte 46 is inserted into the main body 17 through the access port 4. The filling step, in the known way, is performed in such a way that, at the end, the pack 42 is completely submerged in the electrolyte 46 and that the electrolyte 46 fills the spaces between the different layers which constitute the pack 42 itself (Figure 24).

When this sequence of steps has ended for all of the cells of the plurality, the method also comprises carrying out a forming step for the plurality of cells 2 and a cell degassing step.

During the forming step, a charging voltage is applied between the electrical terminals 7 of each cell 2, according to a predetermined charging time pattern. Due to its intrinsic features, the forming step causes the creation of undesired gases in the inner volume 6 of each cell 2. Such undesired gases are at least partially removed from each cell 2 during the degassing step (advantageously most of the gases are removed).

Before performing the forming step, in accordance with one of the innovative aspects of this invention, the method comprises, again inside the dry room, performing a positioning step, during which each cell 2 of the plurality of cells 2 (advantageously either once the relative filling step has ended, or before performing it) is positioned in one of the bays 11 of a holding and moving device 1 made in accordance with this invention. The positioning step is performed while the holding member 10 is in the rest configuration (that is to say, in a configuration similar to that of Figure 6, where however the spacers are shown in the position that they adopt when they are closed in a pack; in order to be able to insert the cells it is also appropriate to unscrew the threaded pin 22 so as to be able to widen the bays).

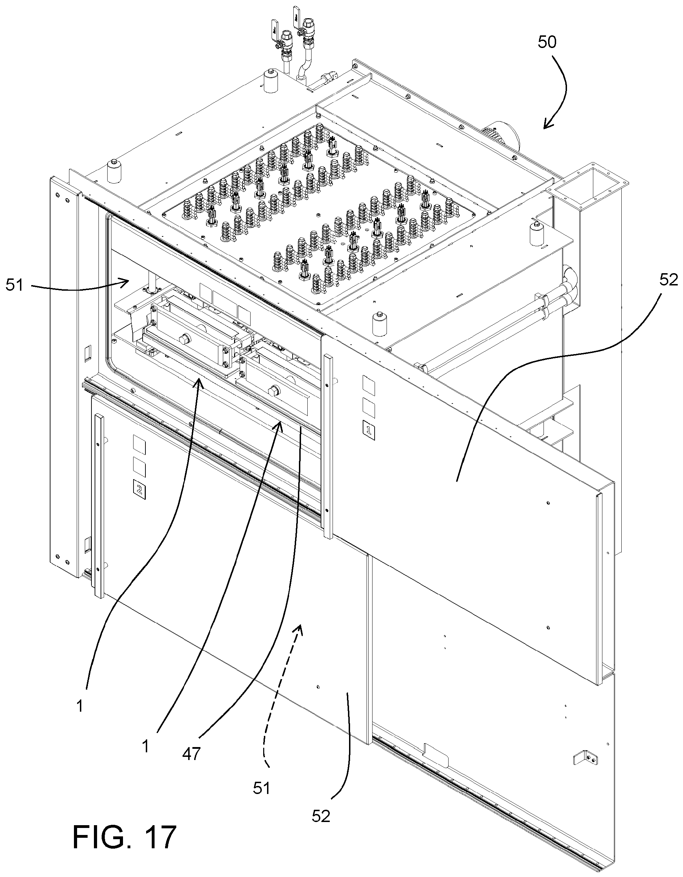

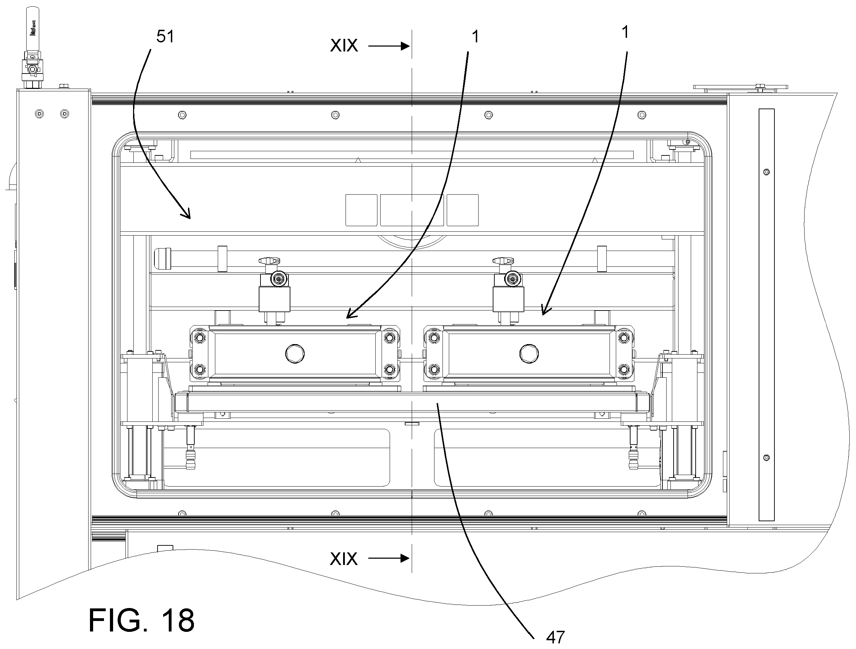

Advantageously, the number of bays 11 is equal to the number of cells 2 which belong to the plurality of cells 2; however, it is also possible to have simultaneous working of a greater number of cells 2, by using multiple devices in parallel. An example of that is shown in Figures 17 to 20, in which the forming step is performed simultaneously on two groups of cells 2 each supported in a device 1 in accordance with this invention, and in which the two devices are moved together by means of a transport pallet 47 (more visible in Figures 1 onwards).

Once all of the bays 11 have been filled with a cell 2, the method comprises performing a temporary sealing step, during which the holding member 10 is switched from the rest configuration to the working configuration, by connecting the access port 4 of each cell 2 gas-tight to a connecting inlet 26 of the expansion circuit 25.

In the case of the embodiment illustrated, the result obtained is that which can be seen in Figures 1-5 and 7-8 (in the case illustrated, during the temporary sealing step the second expansion chamber 293 is also connected to the collecting chamber 292).

At the end of the temporary sealing step, that is to say, when the holding member 10 is in the working configuration (with the connecting valve 36 closed), the inner volume 6 of each cell 2 is gas-tight isolated from the environment which surrounds the cell 2 (again with reference to the pressures of interest).

At this point the method may preferably comprise performing a pressurisation step, during which an overpressure is created in the one or more expansion chambers 29, relative to the pressure of the surrounding environment. Advantageously the overpressure relative to the pressure of the outside environment will be in the range between 1 mbar and 10 mbar.

Then it is possible to proceed with performing a first displacement step, during which the holding and moving device 1, and the plurality of cells 2 positioned on it, are displaced outside the dry room so that they can be subjected to the forming step (performed after the displacement step and outside the dry room). In the embodiment illustrated in the accompanying figures the first displacement step is performed simultaneously for two devices in accordance with this invention, using the above-mentioned transport pallet 47.

Advantageously, the forming step is performed inside a suitable forming apparatus 50, an embodiment of which can be seen in Figures 17 to 20.

The forming apparatus 50 comprises at least one working chamber 51 equipped with a door 52 which can be opened and closed, inside which the working device 1 with all of the cells 2 can be housed (the whole transport pallet 47 with the two working devices in the accompanying figures in which the apparatus 50 also comprises two independent, superposed working chambers 51, the top one open, the bottom one closed).

As indicated, positioning of the cells 2 in the transport device 1 causes positioning of all of the electrical terminals 7 in respective predetermined positions. Consequently, by positioning the device 1 in a specific position provided for inside the working chamber 51, the position of the terminals 7 inside the chamber is known and always the same.

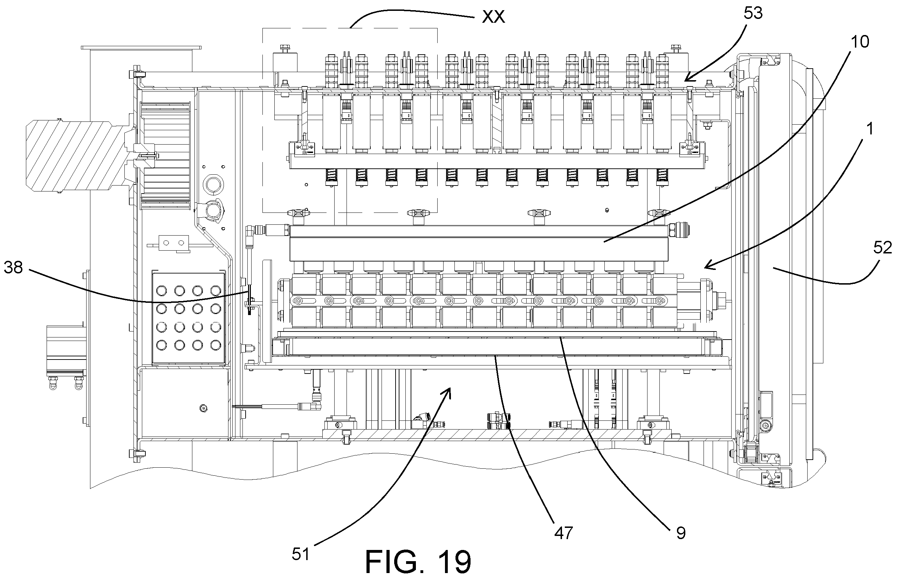

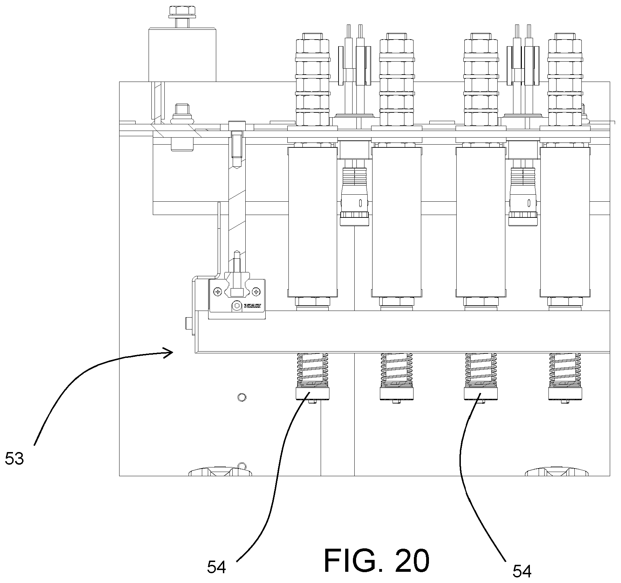

The apparatus 50 also comprises an electrical power supply unit 53 which is movable between a raised position in which it does not interfere with the movement of the device 1 (Figures 19 and 20), and a lowered position.

The electrical power supply unit 53 comprises a plurality of electrical contacts 54 configured to press against the electrical terminals 7 of the cells 2 when the power supply unit is in the lowered position. The electrical contacts 54 are then connected to a voltage supply unit (not illustrated) in such a way that each cell 2 undergoes the required charging pattern. In any case, the structure of the electrical power supply unit 53 is similar to that of existing electrical power supply units already on the market and is known to a person expert in the sector; therefore, it will not be described in further detail.

The apparatus 50 may also comprise an electrical connector connectable to the pressure transducer 37 for monitoring the pressure of the gases inside the expansion circuit 25 (not illustrated).

The apparatus 50 may also comprise a pneumatic connector connectable to the connecting valve 36 for sucking out the gases present inside the expansion circuit 25 (not illustrated).

Regarding the degassing step, it comprises a passive degassing step and an active degassing step.

The passive degassing step is implemented at the same time as the forming step. In fact, during the passive degassing step, at least some of the undesired gases created in each cell 2 expands within the expansion circuit 25 through the access port 4 and the connecting inlet 26 coupled to it. Thanks to the properties of the gases, in order to implement the passive degassing step it is therefore sufficient for the cells 2 to be connected to the expansion circuit 25 and for the creation of undesired gases to occur.

In contrast, during the active degassing step, at least the part of the undesired gases that expanded within the expansion circuit 25 is removed, preferably recovering it for subsequent re-use.

In some embodiments, even the active degassing step is carried out during the forming step, by sucking the gases to be removed through the connecting valve 36.

In contrast, in other embodiments, the active degassing step is carried out after the forming step, in particular after a second displacement step which is performed after the forming and passive degassing steps, and during which the holding and moving device 1 with the plurality of cells 2 is displaced back into the dry room.

After the second displacement step, the method provides for a removal step, performed inside the dry room, during which the holding member 10 is switched to the rest configuration, freeing the access ports 4, and the cells 2 are removed from the bays 11.

The active degassing step may be performed either before the removal step (by means of the connecting valve 36), or simultaneously with the removal step (for example by performing the latter under an extractor hood).

Finally, after the removal step, the method provides for an electrolyte 46 top-up step if necessary, it its level has dropped too low, and a final sealing step during which the access port 4 of each cell 2 is irreversibly sealed to isolate the inner volume 6 fluid-tight from the outside environment.

This invention brings important advantages.

In fact, thanks to this invention it was possible to define a method for producing lithium battery cells which allows the cell forming process to be performed safely without the need to temporarily seal and then re-pierce them. That result was achieved in particular thanks to definition of the device to which this invention relates.

Furthermore, thanks to this invention, it was possible to define a method for producing lithium battery cells which allows the cell forming process to be carried out safely even if they have a very small (if not even zero) empty inner volume, since use of the device, suitably size, allows any quantity of undesired gases which may be created during the forming step to be made to come out of the cell.

Finally, it should be noticed that this invention is relatively easy to produce and that even the cost linked to its implementation is not very high.

All details may be substituted with other technically equivalent elements and the materials used, as well as the shapes and dimensions of the various components, may vary according to requirements.

## Claims

1. Device for holding and moving lithium battery cells (2) during production, where each cell (2) comprises an outer case (3) that is substantially rigid and that has an open access port (4) that connects the outside environment with the inner volume (6) of the cell (2), an electrolyte (46) being present within the inner volume (6), the device (1) comprising:
a supporting base (9) that defines a plurality of bays (11) each of which is configured to house a cell (2) in a respective first predetermined position, the access port (4) of that cell (2) being kept in a respective second predetermined position;
a holding member (10) that is switchable, relative to the supporting base (9), between a working configuration in which it is bound to the supporting base (9) above said bays (11) and, in use, prevents the removal of cells (2) from the bays (11), and a rest configuration in which it allows, in use, the insertion of cells (2) into the bays (11) and the removal of cells (2) from the bays (11); and
an expansion circuit (25) configured to receive, in use, any gaseous substances emitted from the access ports (4) of the cells (2) when the holding member (10) is in the working configuration;
wherein:
the expansion circuit (25) comprises a connecting inlet (26) mounted on the holding member (10) at each bay (11) of said plurality of bays (11);
each connecting inlet (26) is configured to, in use, couple gas-tight to the access port (4) of the cell (2) located in the bay (11) at which the connecting inlet (26) is located when the holding member (10) is in the working configuration;
the expansion circuit (25) also comprises one or more expansion chambers (29); and
each connecting inlet (26) is fluidly connected with at least one of said one or more expansion chambers (29).

2. A device according to claim 1 wherein said one or more expansion chambers (29) comprise, for each connecting inlet (26), a first expansion chamber (291) that is mounted on the holding member (10) and is fluidly connected with the connecting inlet (26).

3. A device according to claim 2 wherein each first expansion chamber (291) is defined by a tumbler-shaped body (30) that is mounted on the holding member (10) and that has a bottom wall (31) with which the connecting inlet (26) is associated.

4. A device according to claim 3 wherein said bottom wall (31) has a funnel shape converging towards the connecting inlet (26).

5. A device according to claim 3 or 4 wherein said tumbler-shaped body (30) is slidingly associated with the holding member (10) and is movable relative to the holding member (10) between a protruding position and a retracted position, and wherein the device (1) further comprises elastic means (35) interposed between the holding member (10) and the tumbler-shaped body (30) which push the tumbler-shaped body (30) toward the protruding position.

6. A device according to any one of claims 1 to 5, wherein said one or more expansion chambers (29) comprise at least one collecting chamber (292) that is made in the holding member (10) and is fluidly connected either with all of said connecting inlets (26) or with a plurality of said connecting inlets (26).

7. A device according to claim 6 wherein the expansion circuit (25) further comprises a connecting valve (36), preferably a quick-connect valve, connectable to an external pressurised gas supply to allow, in use, a pressurisation of the one or more expansion chambers (29) and/or connectable to an external suction circuit to allow, in use, an emptying of the one or more expansion chambers (29).

8. A device according to any one of claims 1 to 7 further comprising at least one pressure transducer (37) mounted in fluid connection with the expansion circuit (25) to measure pressure within the expansion circuit (25).

9. A device according to any one of claims 1 to 8 wherein said one or more expansion chambers (29) comprise a second expansion chamber (293) made in the supporting base (9) and wherein the expansion circuit (25) further comprises a connecting conduit (39) that fluidly connects the second expansion chamber (293) with one or more connecting inlets (26).

10. A device according to any one of claims 1 to 9, wherein the one or more expansion chambers (29) are in a plurality and are all fluidly connected with each other and with all connecting inlets (26).

11. A device according to any one of claims 1 to 10 wherein each connecting inlet (26) includes a nozzle (27) configured to be inserted in an access port (4) and a sealing gasket (28) configured to be pressed against the outer case (3) of the cell (2) around the access port (4) to connect, in use, the connecting inlet (26) gas-tight to the access port (4).

12. A method for producing a plurality of cells (2) for lithium batteries, where each cell (2) comprises an outer case (3) that is substantially rigid, the method initially comprising, for each cell (2), the following steps performed within a dry room:
an insertion step during which a pack (42), comprising one or more first electrodes (43) constituting a cathode of the cell (2), one or more second electrodes (44) constituting an anode of the cell (2) and one or more separator materials (45) interposed between the first electrodes (43) and the second electrodes (44), is inserted into a main body (17) of the outer case (3);
an electrical connection step during which the cathode and anode of the cell (2) are electrically connected to corresponding electrical terminals (7) mounted on a lid (5) of the outer case (3), the lid (5) also having an open, through access port (4);
a closing step during which the lid (5) is fixed fluid-tight to the main body (17) to enclose the pack (42) inside the outer case (3) while keeping the access port (4) open; and
a filling step, during which an electrolyte (46) is inserted into the main body (17) through the access port (4) in such a way that the pack (42) is completely submerged in the electrolyte (46);
the method further comprising:
a forming step for the plurality of cells (2), during which a charging voltage is applied between said electrical terminals (7) of each cell (2) according to a predetermined charging time pattern, the forming step resulting in the creation of undesired gases within the inner volume (6) of each cell (2); and
a degassing step during which at least some of the undesired gases are removed from each cell (2);
**characterised in that** before the forming step, the method also comprises the following steps, also performed inside the dry room:
a positioning step, during which each cell (2) of the plurality of cells (2) is positioned in a bay (11) of a holding and moving device (1) in accordance with any one of claims 1 to 11, with the holding member (10) in a rest configuration; and
a temporary sealing step during which the holding member (10) is switched into the working configuration by connecting the access port (4) of each cell (2) gas-tight to a connecting inlet (26) of the expansion circuit (25);
**in that**:
after the temporary sealing step there is a first displacement step during which the holding and moving device (1) with the plurality of cells (2) is displaced outside the dry room;
the forming step is performed after the displacement step and outside the dry room;
the degassing step includes a passive degassing step and an active degassing step; and
the passive degassing step is implemented at the same time as the forming step;
during the passive degassing step at least some of the undesired gases created in each cell (2) expands within the expansion circuit (25) through the access port (4) and the connecting inlet (26) coupled to it; and
during the active degassing step, at least the part of undesired gases that expanded within the expansion circuit is removed (25);
and **in that**:
after the forming and passive degassing steps, the method provides for a second displacement step during which the holding and moving device (1) with the plurality of cells (2) is displaced back into the dry room;
after the second displacement step, the method provides for a removal step, performed inside the dry room, during which the holding member (10) is switched to the rest configuration and the cells (2) are removed from the bays (11); and
after the removal step, the method provides for a final sealing step during which the access port (4) of each cell (2) is irreversibly sealed to isolate the inner volume (6) fluid-tight from the outside environment.

13. Method according to claim 12, further comprising, after the temporary sealing step and before the first displacement step, a pressurisation step during which an overpressure is created in the one or more expansion chambers (29) relative to the pressure of the surrounding environment.

## Patentansprüche

1. Vorrichtung zum Halten und Bewegen von Lithiumbatteriezellen (2) während der Herstellung, wobei jede Zelle (2) ein Außengehäuse (3) beinhaltet, das im Wesentlichen steif ist und das eine offene Zugangsöffnung (4) hat, die die Außenumgebung mit dem Innenvolumen (6) der Zelle verbindet, dabei ist ein Elektrolyt (46) im Innenvolumen (6) vorhanden, die Vorrichtung (1) beinhaltet dabei Folgendes:
ein Trägergestell (9), das eine Mehrzahl von Einbuchtungen (11) definiert, von denen jede dazu ausgelegt ist, eine Zelle (2) in einer jeweiligen ersten, vorher festgelegten Position aufzunehmen, die Zugangsöffnung (4) dieser Zelle (2) wird dabei in einer jeweiligen zweiten, vorher festgelegten Position gehalten;
ein Halteglied (10), das im Verhältnis zum Trägergestell (9) zwischen einer Betriebskonfiguration, in der es über besagten Einbuchtungen (11) mit dem Trägergestell (9) verbunden ist und im Gebrauch das Entfernen der Zellen (2) aus den Einbuchtungen (11) verhindert, und einer Ruhekonfiguration, in der es im Gebrauch das Einlegen von Zellen (2) in die Einbuchtungen (11) und das Entfernen von Zellen (2) aus den Einbuchtungen erlaubt, umschaltbar ist; und
einen Expansionskreis (25), der dazu ausgelegt ist, im Gebrauch jegliche gasförmigen Stoffe, die aus den Zugangsöffnungen (4) der Zellen (2) austreten, wenn sich das Halteglied (10) in der Betriebskonfiguration befindet, entgegenzunehmen, wobei:
der Expansionskreis (25) einen Verbindungseinlass (26) beinhaltet, der an jeder Einbuchtung (11) besagter Mehrzahl von Einbuchtungen (11) am Halteglied (10) montiert ist;
jeder Verbindungseinlass (26) dazu ausgelegt ist, sich im Gebrauch gasdicht an die Zugangsöffnung (4) der Zelle (2), die sich in der Einbuchtung (11) befindet, an der sich der Verbindungseinlass (26) befindet, wenn das Halteglied (10) in der Betriebskonfiguration ist, anzukoppeln;
der Expansionskreis (25) auch eine oder mehrere Expansionskammern (29) beinhaltet; und
jeder Verbindungseinlass (26) mit mindestens einer der besagten einen oder mehreren Expansionskammern (29) fluidisch verbunden ist.

2. Eine Vorrichtung nach dem Patentanspruch 1, wobei besagte eine oder mehrere Expansionskammern (29) für jeden Verbindungseinlass (26) eine erste Expansionskammer (291), die am Halteglied (10) montiert und fluidisch mit dem Verbindungseinlass (26) verbunden ist, beinhaltet.

3. Eine Vorrichtung nach dem Patentanspruch 2, wobei jede erste Expansionskammer (291) durch einen becherförmigen Körper (30) definiert ist, der am Halteglied (10) montiert ist und der eine Bodenwand (31) hat, mit der der Verbindungseinlass (26) verbunden ist.

4. Eine Vorrichtung nach dem Patentanspruch 3, wobei besagte Bodenwand (31) die Form eines Trichters hat, der in Richtung des Verbindungseinlasses (26) zusammenläuft.

5. Eine Vorrichtung nach dem Patentanspruch 3 oder 4, wobei besagter becherförmiger Körper (30) gleitend mit dem Halteglied (10) verbunden ist und im Verhältnis zum Halteglied (10) zwischen einer herausragenden Position und einer zurückgezogenen Position beweglich ist, und wobei die Vorrichtung (1) außerdem elastische Mittel (35) beinhaltet, die zwischen dem Halteglied (10) und dem becherförmigen Körper (30) eingesetzt sind, die den becherförmigen Körper (30) in Richtung der herausragenden Position schieben.

6. Eine Vorrichtung nach jedem der Patentansprüche 1 bis 5, wobei besagte eine oder mehrere Expansionskammern (29) mindestens eine Sammelkammer (292) beinhalten, die im Halteglied (10) hergestellt ist und entweder mit allen besagten Verbindungseinlässen (26) oder mit einer Vielzahl besagter Verbindungseinlässe (26) fluidisch verbunden ist.

7. Eine Vorrichtung nach dem Patentanspruch 6, wobei der Expansionskreis (25) weiter ein Verbindungsventil (36), vorzugsweise ein Schnellanschlussventil, beinhaltet, das mit einer externen Druckgaszuführung verbunden werden kann, um im Gebrauch die Druckbeaufschlagung der einen oder mehreren Expansionskammern (29) zu erlauben, und/oder mit einem externen Saugkreislauf verbunden werden kann, um im Gebrauch ein Entleeren der einen oder mehreren Expansionskammern (29) zu erlauben.

8. Eine Vorrichtung nach jedem der Patentansprüche 1 bis 7, weiter mindestens einen Druckaufnehmer (37) beinhaltend, der in Fluidverbindung mit dem Expansionskreis (25) montiert ist, um den Druck innerhalb des Expansionskreises (25) zu messen.

9. Eine Vorrichtung nach jedem der Patentansprüche 1 bis 8, wobei besagte eine oder mehrere Expansionskammern (29) eine zweite Expansionskammer (293) beinhalten, die im Trägergestell (9) hergestellt ist, und wobei der Expansionskreis (25) weiter einen Verbindungskanal (39), der die zweite Expansionskammer (293) mit einem oder mehreren Verbindungseinlässen (26) fluidisch verbindet, beinhaltet.

10. Eine Vorrichtung nach jedem der Patentansprüche 1 bis 9, wobei die eine oder die mehreren Expansionskammern (29) eine Vielzahl sind und alle miteinander und mit allen Verbindungseinlässen (26) fluidisch verbunden sind.

11. Eine Vorrichtung nach jedem der Patentansprüche 1 bis 10, wobei jeder Verbindungseinlass (26) eine Düse (27), die dazu ausgelegt ist, in eine Zugangsöffnung (4) eingeführt zu werden, und eine Dichtung (28), die dazu ausgelegt ist, um die Zugangsöffnung (4) herum gegen das Außengehäuse (3) der Zelle (2) gedrückt zu werden, um im Gebrauch den Verbindungseinlass (26) gasdicht mit der Zugangsöffnung (4) zu verbinden, beinhaltet.

12. Ein Verfahren zur Herstellung einer Vielzahl von Zellen (2) für Lithiumbatterien, wobei jede Zelle (2) ein Außengehäuse (3) beinhaltet, das im Wesentlichen steif ist, das Verfahren beinhaltet dabei anfangs für jede Zelle (2) folgende Schritte, die in einem Trockenraum durchgeführt werden:
einen Einfügeschritt, während dessen ein Paket (42), das eine oder mehrere erste Elektroden (43), die dabei eine Kathode der Zelle (2) bilden, eine oder mehrere zweite Elektroden (44), die dabei eine Anode der Zelle (2) bilden, und ein oder mehrere Trennstoffe (45), die sich zwischen den ersten Elektroden (43) und den zweiten Elektroden befinden, beinhaltet, in einen Hauptkörper (17) des Außengehäuses (3) eingefügt wird;
einen Schritt des elektrischen Anschlusses, während dessen die Kathode und Anode der Zelle (2) elektrisch an entsprechende elektrische Terminale (7), die an einem Deckel (5) des Außengehäuses (3) montiert sind, angeschlossen werden, der Deckel (5) hat dabei auch eine offene, durchgehende Zugangsöffnung (4);
einen Schritt des Verschließens, während dessen der Deckel (5) flüssigkeitsdicht am Hauptkörper (17) befestigt wird, um das Paket (42) im Außengehäuse (3) einzuschließen, während die Zugangsöffnung (4) offen gehalten wird; und
einen Füllschritt, während dessen ein Elektrolyt (46) solcherart durch die Zugangsöffnung (4) in den Hauptkörper (17) eingeführt wird, dass das Paket (42) vollständig in den Elektrolyt (46) eingetaucht ist;
das Verfahren beinhaltet dabei weiter Folgendes:
einen Formationsschritt für die Vielzahl von Zellen (2), während dessen eine Ladespannung zwischen besagte elektrische Terminale (7) jeder Zelle (2) nach einem vorher festgelegten Ladezeitmuster angelegt wird, der Formationsschritt hat die Erzeugung unerwünschter Gase im Innenvolumen (6) jeder Zelle (2) zur Folge; und
einen Entgasungsschritt, während dessen mindestens einige der unerwünschten Gase aus jeder Zelle (2) entfernt werden;
**dadurch gekennzeichnet, dass** das Verfahren vor dem Formationsschritt auch folgende Schritte beinhaltet, die ebenfalls im Trockenraum durchgeführt werden:
einen Positionierungsschritt, während dessen jede Zelle (2) der Vielzahl von Zellen (2) in einer Einbuchtung (11) einer Halte- und Bewegungsvorrichtung (1) nach jedem der Patentansprüche 1 bis 11 positioniert wird, wobei das Halteglied (10) in einer Ruhekonfiguration ist; und
einen vorläufigen Siegelungsschritt, während dessen das Halteglied (10) in die Betriebskonfiguration umgeschaltet wird, indem die Zugangsöffnung (4) jeder Zelle (2) gasdicht an einen Verbindungseinlass (26) des Expansionskreises angeschlossen wird;
dadurch, dass:
nach dem vorläufigen Siegelungsschritt ein erster Verschiebungsschritt erfolgt, während dessen die Halte- und Bewegungsvorrichtung (1) mit der Vielzahl von Zellen (2) aus dem Trockenraum hinaus verschoben wird;
der Formationsschritt nach dem Verschiebungsschritt und außerhalb des Trockenraums durchgeführt wird;
der Entgasungsschritt einen passiven Entgasungsschritt und einen aktiven Entgasungsschritt beinhaltet; und
der passive Entgasungsschritt zu derselben Zeit wie der Formationsschritt umgesetzt wird;
während des passiven Entgasungsschritts sich mindestens einige der unerwünschten Gase, die in jeder Zelle (2) erzeugt wurden, durch die Zugangsöffnung (4) und den daran gekoppelten Verbindungseinlass (26) innerhalb des Expansionskreises (25) ausdehnen; und
während des aktiven Entgasungsschritts zumindest der Teil unerwünschter Gase, der sich im Expansionskreis (25) ausgedehnt hat, entfernt wird; und dadurch, dass:
nach dem Formations- und dem passiven Entgasungsschritt das Verfahren einen zweiten Verschiebungsschritt vorsieht, während dessen die Halte- und Bewegungsvorrichtung (1) mit der Vielzahl von Zellen (2) zurück in den Trockenraum verschoben wird;
nach dem zweiten Verschiebungsschritt das Verfahren einen Entnahmeschritt vorsieht, der im Trockenraum durchgeführt wird, während dessen das Halteglied (10) in die Ruhekonfiguration geschaltet wird und die Zellen (2) aus den Einbuchtungen (11) entnommen werden; und
nach dem Entnahmeschritt das Verfahren einen endgültigen Siegelungsschritt vorsieht, während dessen die Zugangsöffnung (4) jeder Zelle (2) unwiderruflich versiegelt wird, um das Innenvolumen (6) flüssigkeitsdicht von der Außenumgebung zu isolieren.

13. Verfahren nach dem Patentanspruch 12, weiter, nach dem vorläufigen Versiegelungsschritt und vor dem ersten Verschiebungsschritt einen Druckbeaufschlagungsschritt beinhaltend, während dessen in der einen oder den mehreren Expansionskammern (29) im Verhältnis zum Druck der Außenumgebung ein Überdruck erzeugt wird.

## Revendications

1. Dispositif pour le maintien et le déplacement de cellules de batterie au lithium (2) pendant la production, dans lequel chaque cellule (2) comprend un boîtier extérieur (3) qui est essentiellement rigide et qui a un orifice d'accès (4) qui relie l'environnement extérieur avec le volume intérieur (6) de la cellule (2), un électrolyte (46) étant présent à l'intérieur du volume intérieur (6), le dispositif (1) comprenant :
une base de support (9) qui définit une pluralité de baies (11) dont chacune est configurée pour loger une cellule (2) dans une première position prédéfinie respective, l'orifice d'accès (4) de cette cellule (2) étant maintenu dans une deuxième position prédéfinie respective ;
un élément de maintien (10) qui peut être commutable, par rapport à la base de support (9), entre une configuration de travail dans laquelle il est contraint à la base de support (9) au-dessus desdites baies (11) et, lors de l'utilisation, empêche le retrait des cellules (2) des baies (11), et une configuration de repos dans laquelle il permet, lors de l'utilisation, l'introduction de cellules (2) dans les baies (11) et le retrait de cellules (2) des baies (11) ; et
un circuit d'expansion (25) configuré pour recevoir, lors de l'utilisation, d'éventuelles substances gazeuses émises par les orifices d'accès (4) des cellules (2) lorsque l'élément de maintien (10) est dans la configuration de travail ;
dans lequel :
le circuit d'expansion (25) comprend une entrée de raccordement (26) montée sur l'élément de maintien (10) au niveau de chaque baie (11) de ladite pluralité de baies (11) ;
chaque entrée de raccordement (26) est configurée pour, lors de l'utilisation, se coupler de façon étanche aux gaz avec l'orifice d'accès (4) de la cellule (2) située dans la baie (11) au niveau de laquelle se trouve l'entrée de raccordement (26) lorsque l'élément de maintien (10) est dans la configuration de travail ;
le circuit d'expansion (25) comprend également une ou plusieurs chambres d'expansion (29) ; et
chaque entrée de raccordement (26) est raccordée en communication de fluide avec au moins l'une desdites une ou plusieurs chambres d'expansion (29).

2. Dispositif selon la revendication 1, dans lequel lesdites une ou plusieurs chambres d'expansion (29) comprennent, pour chaque entrée de raccordement (26), une première chambre d'expansion (291) qui est montée sur l'élément de maintien (10) et est raccordée en communication de fluide avec l'entrée de raccordement (26).

3. Dispositif selon la revendication 2, dans lequel chaque première chambre d'expansion (291) est définie par un corps en forme de verre (30) qui est monté sur l'élément de maintien (10) et qui a une paroi de fond (31) avec laquelle l'entrée de raccordement (26) est associée.

4. Dispositif selon la revendication 3, dans lequel ladite paroi de fond (31) a une forme en entonnoir convergeant vers l'entrée de raccordement (26).

5. Dispositif selon la revendication 3 ou 4, dans lequel ledit corps en forme de verre (30) est associé de façon coulissante avec l'élément de maintien (10) et est mobile par rapport à l'élément de maintien (10) entre une position en saillie et une position rentrée, et dans lequel le dispositif (1) comprend en outre des moyens élastiques (35) interposés entre l'élément de maintien (10) et le corps en forme de verre (30) qui poussent le corps en forme de verre (30) vers la position en saillie.

6. Dispositif selon l'une quelconque des revendications de 1 à 5, dans lequel lesdites une ou plusieurs chambres d'expansion (29) comprennent au moins une chambre de collecte (292) qui est réalisée dans l'élément de maintien (10) et est raccordée en communication de fluide soit avec toutes lesdites entrées de raccordement (26) soit avec une pluralité desdites entrées de raccordement (26).

7. Dispositif selon la revendication 6, dans lequel le circuit d'expansion (25) comprend en outre une vanne de raccordement (36), de préférence une vanne à raccord rapide, pouvant être raccordée à une alimentation externe en gaz sous pression pour permettre, lors de l'utilisation, une pressurisation desdites une ou plusieurs chambres d'expansion (29) et/ou pouvant être raccordée à un circuit externe d'aspiration pour permettre, lors de l'utilisation, un vidage desdites une ou plusieurs chambres d'expansion (29).

8. Dispositif selon l'une quelconque des revendications de 1 à 7, comprenant en outre au moins un transducteur de pression (37) monté en raccordement de fluide avec le circuit d'expansion (25) pour mesurer la pression à l'intérieur du circuit d'expansion (25).

9. Dispositif selon l'une quelconque des revendications de 1 à 8, dans lequel lesdites une ou plusieurs chambres d'expansion (29) comprennent une deuxième chambre d'expansion (293) réalisée dans la base de support (9) et dans lequel le circuit d'expansion (25) comprend en outre un conduit de raccordement (39) qui raccorde en communication de fluide la deuxième chambre d'expansion (293) avec une ou plusieurs entrées de raccordement (26).

10. Dispositif selon l'une quelconque des revendications de 1 à 9, dans lequel lesdites une ou plusieurs chambres d'expansion (29) sont une pluralité et sont toutes raccordées en communication de fluide les unes avec les autres et avec toutes les entrées de raccordement (26).

11. Dispositif selon l'une quelconque des revendications de 1 à 10, dans lequel chaque entrée de raccordement (26) comprend une buse (27) configurée pour être introduite dans un orifice d'accès (4) et une garniture d'étanchéité (28) configurée pour être pressée contre le boîtier extérieur (3) de la cellule (2) autour de l'orifice d'accès (4) pour raccorder, lors de l'utilisation, l'entrée de raccordement (26) à l'orifice d'accès (4) de façon étanche aux gaz.

12. Procédé pour la fabrication d'une pluralité de cellules (2) pour batteries au lithium, où chaque cellule (2) comprend un boîtier extérieur (3) qui est essentiellement rigide, le procédé comprenant initialement, pour chaque cellule (2), les étapes suivantes effectuées dans une pièce sèche :
une étape d'introduction au cours de laquelle un bloc (42), comprenant une ou plusieurs premières électrodes (43) constituant une cathode de la cellule (2), une ou plusieurs deuxièmes électrodes (44) constituant une anode de la cellule (2) et un ou plusieurs matériaux de séparation (45) interposés entre les premières électrodes (43) et les deuxièmes électrodes (44), est introduit dans un corps principal (17) du boîtier extérieur (3) ;
une étape de raccordement électrique au cours de laquelle la cathode et l'anode de la cellule (2) sont électriquement raccordées à des bornes électriques (7) correspondantes montées sur un couvercle (5) du boîtier extérieur (3), le couvercle (5) ayant également un orifice d'accès (4) traversant et ouvert ;
une étape de fermeture au cours de laquelle le couvercle (5) est fixé de façon étanche aux fluides au corps principal (17) pour enfermer le bloc (42) à l'intérieur du boîtier extérieur (3) tout en maintenant l'orifice d'accès (4) ouvert ; et
une étape de remplissage, au cours de laquelle un électrolyte (46) est introduit dans le corps principal (17) à travers l'orifice d'accès (4) de manière à ce que le bloc (42) soit complètement immergé dans l'électrolyte (46) ;
le procédé comprenant en outre :
une étape de formation de la pluralité de cellules (2), au cours de laquelle une tension de chargement est appliquée entre lesdites bornes électriques (7) de chaque cellule (2) selon un schéma de temps de chargement prédéfini, l'étape de formation déterminant la création de gaz indésirables à l'intérieur du volume intérieur (6) de chaque cellule (2) ; et
une étape de dégazage au cours de laquelle au moins une partie des gaz indésirables est éliminée de chaque cellule (2) ;
**caractérisé en ce que**, avant l'étape de formation, le procédé comprend également les étapes suivantes, effectuées elles aussi dans la pièce sèche :
une étape de positionnement, au cours de laquelle chaque cellule (2) de la pluralité de cellules (2) est positionnée dans une baie (11) d'un dispositif de maintien et de déplacement (1) selon l'une quelconque des revendications de 1 à 11, avec l'élément de maintien (10) dans une configuration de repos ; et
une étape de scellage temporaire au cours de laquelle l'élément de maintien (10) est commuté dans la configuration de travail en raccordant de façon étanche aux gaz l'orifice d'accès (4) de chaque cellule (2) à une entrée de raccordement (26) du circuit d'expansion (25) ;
**en ce que** :
après l'étape de scellage temporaire, une première étape de déplacement est prévue, au cours de laquelle le dispositif de maintien et de déplacement (1) avec la pluralité de cellules (2) est déplacé hors de la pièce sèche ;
l'étape de formation est effectuée après l'étape de déplacement et à l'extérieur de la pièce sèche ;
l'étape de dégazage comprend une étape de dégazage passif et une étape de dégazage actif ; et
l'étape de dégazage passif est mise en œuvre en même temps que l'étape de formation ;
au cours de l'étape de dégazage passif, au moins une partie des gaz indésirables créées dans chaque cellule (2) se répand dans le circuit d'expansion (25) à travers l'orifice d'accès (4) et l'entrée de raccordement (26) qui lui est raccordée ; et
au cours de l'étape de dégazage actif, au moins la partie des gaz indésirables qui s'est répandue dans le circuit d'expansion (25) est éliminée ;
et **en ce que** :
après les étapes de formation et de dégazage passif, le procédé prévoit une deuxième étape de déplacement au cours de laquelle le dispositif de maintien et de déplacement (1) avec la pluralité de cellules (2) est à nouveau déplacé dans la pièce sèche ;
après la deuxième étape de déplacement, le procédé prévoit une étape de retrait, effectuée à l'intérieur de la pièce sèche, au cours de laquelle l'élément de maintien (10) est commuté dans la configuration de repos et les cellules (2) sont retirées des baies (11) ; et
après l'étape de retrait, le procédé prévoit une étape de scellage définitif au cours de laquelle l'orifice d'accès (4) de chaque cellule (2) est scellé de manière irréversible pour isoler de façon étanche aux fluides le volume intérieur (6) par rapport à l'environnement extérieur.

13. Procédé selon la revendication 12, comprenant en outre, après l'étape de scellage temporaire et avant la première étape de déplacement, une étape de pressurisation au cours de laquelle une surpression est créée dans lesdites une ou plusieurs chambres d'expansion (29) par rapport à la pression du milieu environnant.
